# EUROPÄISCHE PATENTSCHRIFT

(11) **EP 2 656 326 B1**
(45) Veröffentlichungstag und Bekanntmachung des Hinweises auf die Patenterteilung: **19.08.2015**
(21) Anmeldenummer: 11805781.9
(22) Anmeldetag: 19.12.2011
(51) Int. Cl.: G07D 7/18, G01N 21/86, G01N 21/88, G01N 21/15

(54) **VERSCHMUTZUNGSPRÜFUNG DES FENSTERS EINER MESSVORRICHTUNG ZUR PRÜFUNG VON BLATTGUT**
SOILING CHECK OF THE WINDOW OF A MEASURING DEVICE FOR CHECKING SHEET MATERIAL
TEST D'ENCRASSEMENT DE LA FENÊTRE D'UN DISPOSITIF DE MESURE DESTINÉ À ANALYSER UNE FEUILLE

(30) Priorität: 21.12.2010 DE 102010055428
(43) Veröffentlichungstag der Anmeldung: 30.10.2013
(73) Patentinhaber: Giesecke & Devrient GmbH, 81677 München (DE)
(72) Erfinder: SCHMALZ, Steffen, 81375 München (DE)
(86) Internationale Anmeldenummer: PCT/EP2011/006415
(87) Internationale Veröffentlichungsnummer: WO 2012/084183

(56) Entgegenhaltungen:
- EP-A1- 1 128 337
- DE-A1- 10 234 431
- DE-A1- 19 901 702
- DE-A1-102004 039 049
- DE-A1-102006 052 798

## Beschreibung

Die vorliegende Erfindung betrifft ein Verfahren zur Verschmutzungsprüfung des Fensters einer Messvorrichtung zur Prüfung von Blattgut, eine Messvorrichtung, die zur Durchführung des Verfahrens ausgebildet ist, und eine Vorrichtung zur Bearbeitung von Blattgut, die die Messvorrichtung enthält.

Vorrichtungen zur Bearbeitung von Blattgut sind Vorrichtungen wie Bearbeitungsmaschinen für Wertdokumente, beispielsweise Banknotenbearbeitungsrnaschinen zur Prüfung von Banknoten, oder andere Bearbeitungsmaschinen wie beispielsweise Geldeinzahlautomaten und Geldauszahlautomaten. Geprüft werden kann Blattgut beliebiger Art, insbesondere Wertdokumente, wie beispielsweise Banknoten. Generell werden unter "Blattgut" blattförmige Gegenstände verstanden. Bei Wertdokumenten ergibt sich die Notwendigkeit, sie auf Echtheit zu prüfen, und Wertdokumente wie Banknoten, die stark beansprucht werden und dabei verschmutzen, müssen gelegentlich auf ihren Zustand überprüft werden und bei zu starker Verschmutzung aus dem Verkehr gezogen werden. Deshalb prüfen Banknotenbearbeitungsmaschinen die Banknoten auf Echtheit, zum Teil aber auch auf ihren Zustand, insbesondere auf ihren Verschmutzungszustand. Zu stark verschmutzte Banknoten werden durch die Banknotenbearbeitungsmaschine aussortiert und ggf. in der Maschine automatisch zerstört, damit sie aus dem Umlauf entfernt werden.

Da ein bevorzugtes Anwendungsgebiet der vorliegenden Erfindung Banknotenbearbeitungsmaschinen und die Prüfung von Banknoten ist, wird die Erfindung nachfolgend anhand von Banknotenbearbeitungsmaschinen und Messvorrichtung zur Prüfung von Banknoten beschrieben. Die vorliegende Erfindung ist jedoch keinesfalls auf dieses Anwendungsgebiet beschränkt, sondern kann bei der Prüfung von beliebigem Blattgut angewendet werden.

In Vorrichtungen zur Prüfung von Banknoten werden die Banknoten üblicherweise an einer oder an beiden Oberflächen mittels mindestens einer Lichtquelle bestrahlt, und das remittierte Licht und/oder das transmittierte Licht wird mittels geeigneter optischer Sensoren detektiert, vgl. z.B. EP1128337 A1, DE102004039049 A1 und DE10234431 A1. Die DE10234431 A1 offenbart, bei der Prüfung einer Banknote nur denjenigen Bereich zu prüfen, in dem ein Sicherheitselement liegt, beschäftigt sich aber nicht mit der Verschmutzungsprüfung des Sensorfensters.

Zum Schutz der Sensoren befinden sich meist Fenster, die für die verwendeten Wellenlängen durchlässig sind, zwischen den transportierten Blanknoten und den Sensoren, um eine mechanische Beschädigung oder ein Verschmutzen der Sensoren zu verhindern. Im Laufe der Zeit verschmutzen jedoch diese Fenster, so dass das remittierte Licht, das von einem Sensor detektiert wird, nicht notwendigerweise von der geprüften Banknote, sondern möglicherweise von einer Messfenster-Verschmutzung stammt. Das Ergebnis der optischen Prüfung der Banknoten kann dadurch verfälscht werden. Beispielsweise führt die Verschmutzung, entlang der Transportrichtung der Banknote durch die Bearbeitungsmaschine gesehen, zu hellen Streifen auf dem detektierten Banknotenbild. Diese Streifen kommen z.B. durch Streulicht des lokal verschmutzten Messfensters zustande. Das Messfenster bzw. die Messfenster werden deshalb, wenn ein bestimmter Verschmutzungsgrad erreicht ist, gereinigt.

Zur Feststellung, wann eine Reinigung notwendig ist, wird während des Betriebs einer Banknotenbearbeitungsmaschine die Verschmutzung der Messfenster regelmäßig automatisch überprüft. Zu diesem Zweck wird von dem Sensor in Phasen, wenn sich keine Banknote in seinem Erfassungsbereich befindet, das remittierte oder das transmittierte Licht detektiert, vgl. EP1128337 A1 und DE19902702 A1. Der ermittelte Wert wird mit einem Referenzwert für ein sauberes Fenster verglichen. Wenn die Differenz einen vorgegebenen Wert überschreitet, wird die Notwendigkeit einer Reinigung angezeigt oder eine Reinigung automatisch durchgeführt, beispielsweise durch Blasluft, die auf das Messfenster gerichtet wird. Alternativ können die Messfenster manuell gereinigt werden. Da zur Reinigung üblicherweise der Betrieb der Banknotenbearbeitungsmaschine unterbrochen werden muss, ftihren häufige manuelle oder automatische Reinigungsarbeiten zu einer Reduzierung des Banknotendurchsatzes der Maschine.

Aufgabe der vorliegenden Erfindung ist es daher, den Durchsatz von Banknotenbearbeitungsmaschinen und anderer Vorrichtungen zur Bearbeitung von Blattgut zu erhöhen. Aufgabe der vorliegenden Erfindung ist es insbesondere, die Häufigkeit erforderlicher Reinigungsarbeiten der Messfenster zu verringern. Die Qualität der Messungen an dem zu prüfenden Blattgut darf durch die geringere Anzahl an Reinigungsarbeiten nicht gesenkt werden.

Die Aufgabe wird gelöst durch das Verfahren zur Verschmutzungsprüfung des Fensters einer Messvorrichtung, die zur Prüfung von Blattgut ausgebildet ist, mit den Merkmalen, wie sie im Anspruch 1 angegeben sind. Die Prüfung des Blattguts kann eine optische Prüfung des Blattguts sein, z.B. um die Sorte des Blattguts und/oder dessen Zustand und/oder die Echtheit des Blattguts festzustellen. Dieses Blattgut sind insbesondere Wertdokumente, zum Beispiel Banknoten. Die Aufgabe wird ferner gelöst durch die Messvorrichtung, die zur Durchführung dieses Verfahrens ausgelegt ist, mit den Merkmalen, wie sie im Anspruch 10 angegeben sind. Die Aufgabe wird auch gelöst durch die Vorrichtung zur Bearbeitung von Blattgut, die die Messvorrichtung enthält, mit den Merkmalen, wie sie im Anspruch 15 angegeben sind. Weiterbildungen der Erfindung sind in den jeweiligen abhängigen Ansprüchen angegeben.

Die Erfindung geht dabei von der Überlegung aus, dass bei der Prüfung von Blattgut in vielen Fällen das Blattgut nicht vollflächig geprüft wird, sondern nur ein Teilbereich des Blattguts geprüft wird, z.B. bei der Prüfung auf Echtheit, bei der Prüfung der Sorte oder auch den Zustand des Blattguts. Beispielsweise werden bei einer Verschmutzungsprüfung von Wertdokumenten normalerweise nicht beide Oberflächen des Blattguts vollflächig auf Verschmutzung überprüft. Vielmehr gibt es bei jedem Wertdokument Bereiche, in denen eine Verschmutzung besonders störend ist, und andere Bereiche, in denen sie notfalls toleriert werden kann. Bei Banknoten können Bereiche, in denen eine Verschmutzung besonders störend ist, zum Beispiel der unbedruckte Banknotenrandbereich, das Weißfeld der Banknote, Portrait-Bereiche und der Bereich mit der Banknotennummer sein. Um den Aufwand bei der Beurteilung des Verschmutzungsgrads zu verringern, werden in der Regel für jedes Wertdokument einer oder mehrere Teilbereiche definiert, in denen eine Verschmutzungsprüfung stattfinden soll. Die übrigen Bereiche des Wertdokuments werden nicht auf Verschmutzung geprüft. Wenn auf einer Oberfläche eines Wertdokuments mehrere Teilbereiche auf Verschmutzung geprüft werden, können diese Teilbereiche getrennt liegen oder einander überlappen. Analog zur Verschmutzungsprüfung können auch für die Echtheitsprüfung und/oder die Prüfung der Sorte der Banknoten einer oder mehrere zu prüfenden Teilbereiche einer Banknote definiert werden.

Eine zur Bearbeitung von Blattgut geeignete Vorrichtung kann so ausgebildet sein, dass das Blattgut in schneller Folge entlang eines Transportwegs durch die Vorrichtung hindurchgeführt werden und dabei auch zwischen zwei Messfenstern einer Messvorrichtung hindurchgeführt werden. Beidseitig der Messfenster sind eine oder mehrere Lichtquellen und jeweils ein optischer Sensor der Messvorrichtung angeordnet. Diese optischen Sensoren haben die Form von Sensorzeilen, wobei es sich beispielsweise um Bildsensoren handelt, üblicherweise um CMOS-, CCD- oder Photodiodenzeilen. Die Sensorzeilen haben mindestens die Breite des zu prüfenden Blattguts. Es wird darauf hingewiesen, dass für die Zwecke der vorliegenden Erfindung der Begriff "Länge" die Ausdehnung eines Gegenstands in Transportrichtung des Blattgut bedeutet, während der Begriff "Breite" die Ausdehnung eines Gegenstands senkrecht zur Transportrichtung des Blattguts bezeichnet. Entsprechend wird bei den Sensorzeilen von einer "Breite" gesprochen, da sie sich senkrecht zur Transportrichtung erstrecken.

Von den Lichtquellen wird Licht einer oder mehrerer bestimmter Wellenlängen, die im sichtbaren Bereich, im UV- oder IR-Bereich liegen können, durch die Messfenster auf die Oberflächen eines sich in dem betreffenden Bereich befindlichen Blattguts aufgestrahlt. Das aufgestrahlte Licht wird von den Oberflächen remittiert, passiert erneut die Messfenster und wird schließlich von der Sensorzeile empfangen. Von dem an der Messvorrichtung vorbeitransportierten Blattgut wird auf diese Weise zeilenweise ein Bild aufgenommen. Zur Prüfung des Blattguts werden von den detektierten Signalen der Sensorzeile allerdings nur die Signale des Lichts ausgewertet, das von dem Teilbereich des Blattguts remittiert wird, der vorab als zu prüfender Teilbereich festgelegt wurde. Die auf den Teilbereich des Blattguts begrenzte Prüfung ist z.B. eine Verschmutzungsprüfung, eine Echtheitsprüfung, eine Prüfung der Sorte des Blattguts oder eine andere art der Prüfung. Statt in Remisssion kann das Blattgut auch in Transmission, beispielsweise mittels einer Dunkelfeld-Transmissionsmessung gemessen werden. Es ist natürlich auch möglich, Lichtquelle und Sensorzeilen nur an einer Seite des Blattgut-Transpörtwegs vorzusehen und auf eine gegenüberliegende Messvorrichtung zu verzichten.

Bei Vorrichtungen zur Bearbeitung von Wertdokumenten werden die Wertdokumente üblicherweise unmittelbar aufeinander folgend durch die Vorrichtung hindurchtransportiert und jeweils, nach einer gewissen Zahl von transportierten Wertdokumenten, eine Transportpause eingelegt. Während der Transportpausen befindet sich kein Wertdokument im, Erfassungsbereich der Sensorzeile, und das von der Sensorzeile empfangene Licht ist das Licht, das entweder von den Fenstern selbst oder von Verschmutzungen auf den Fenstern remittiert bzw. transmittiert wird. Dieses Licht wird durch eine Auswerteeinrichtung ausgewertet und durch einen Vergleich mit einem Referenzwert für saubere Messfenster wird die Verschmutzung der Messfenster ermittelt. Überschreitet der ermittelte Wert einen bestimmten Schwellenwert, so wird eine Aufforderung zur Reinigung der Fenster ausgegeben oder der Betrieb der Vorrichtung automatisch gestoppt und eine Fensterreinigung durchgeführt.

Die Verschmutzung der Fenster kann in Remission und/oder in Transmission, z.B. mit Hilfe einer Dunkelfeld-Transmissionsmessung, gemessen werden. Während bei einer Remissionsmessung Lichtquelle und Sensorzeile auf derselben Seite des Fensters angeordnet sind, sind sie bei einer Transmissionsmessung auf entgegengesetzten Seiten des Fensters angeordnet. Bei der Transmissionsmessung wird das Licht der Lichtquelle, beispielsweise sichtbares Licht, UV- oder IR-Licht, durch das Messfenster, bzw. bei einer symmetrischen Anordnung durch die Messfenster, hindurchgestrahlt und von der zugehörigen Sensorzeile auf der anderen Seite des Messfensters detektiert. Durch Vergleich mit einem Referenzwert für saubere Messfenster wird der Verschmutzungsgrad des Messfensters bzw. der Messfenster bestimmt.

Die bisherigen Verfahren zur Bestimmung der Verschmutzung der Messfenster laufen so ab, dass sie die Verschmutzung der Fenster in Wertdokument-Transportpausen messern, und dass außerdem die Messfenster über die gesamte Fensterbreite auf Verschmutzung geprüft werden. Es findet also auch eine Verschmutzungsprüfung der Messfenster in solchen Bereichen statt, die ohne weiteres verschmutzt sein dürfen, da sie, bei der Prüfung des Wertdokuments, über bzw. unter denjenigen Teilbereichen des Wertdokuments angeordnet sind, die nicht geprüft werden. Wenn sich in einem dieser Bereiche eine Verschmutzung befindet, wird bisher trotzdem eine Reinigungsaktion durchgeführt.

In Aussicht auf eine zu prüfende Banknote oder ein anderes Wertdokument entspricht jedem Teilbereich der Banknote, der geprüft wird, ein im Wesentlichen ebenso breiter Teilbereich der Messfenster über bzw. unter der Banknote, durch den das eingestrahlte bzw. remittierte oder transmittierte Licht bei der Prüfung der Banknote hindurchtritt. Bei der vorliegenden Erfindung wird nun, im Unterschied zu bisherigen Verschmutzungsprüfungen der Messfenster, die Verschmutzungsprüfung gezielt auf einen oder mehrere Teilbereiche der Messfenster beschränkt, und zwar auf diejenigen Teilbereiche der Messfenster, die bei der Prüfung der jeweils zu prüfenden Banknote tatsächlich eine Rolle spielen, d. h. durch die das von der Banknote remittierte Licht oder durch die Banknote transmittierte Licht hindurchtritt, das für die Prüfung der Banknote ausgewertet wird. Eine Verschmutzung eines Messfensters außerhalb des relevanten Teilbereichs wird nicht bestimmt, d. h. sie wird bei der Verschmutzungsprüfung nicht berücksichtigt, und daher wird auch keine Reinigungsaktion veranlasst. Unnötige Reinigungsaktionen aufgrund einer Verschmutzung in einem Bereich eines Messfensters, der außerhalb des Teilbereichs liegt, der für die Prüfung der Banknote relevant ist, werden dadurch vermieden, und zwar ohne negative Auswirkungen auf die Prüfung der Banknoten. Die Erfindung ermöglicht daher eine Reduzierung von Reinigungsaktionen, was zu weniger Unterbrechungen des Betriebs und zu einem erhöhten Durchsatz an Wertdokumenten wie Banknoten führt.

Bei jedem Messfenster weist der auf Verschmutzung zu prüfende Teilbereich des Messfensters, senkrecht zur Transportrichtung der Banknote betrachtet, eine geringere Breite auf als die Banknotenbreite. Die Lage und Breite des auf Verschmutzung zu prüfenden Teilbereichs eines Messfensters wird so gewählt, dass sie etwa dem zu prüfenden Teilbereich der Banknote entspricht, d. h. das Licht, das von dem zu prüfenden Teilbereich der Banknote ausgeht, fällt durch diesen Teilbereich des Messfensters hindurch auf die Sensorzeile. Gemäß einer bevorzugten Ausführungsform wird die Breite des Teilbereichs des Messfensters, in dem das Messfenster auf Verschmutzung geprüft wird, etwas größer gewählt als die Breite des entsprechenden Teilbereichs der Banknote, z.B. um Transportschwankungen der Banknote zu berücksichtigen. Je schmäler der Teilbereich der Banknote, der für deren Prüfung herangezogen wird, ist, desto schmäler kann auch der Teilbereich der Fenster gewählt werden, der auf Verschmutzung geprüft wird. Die erfindungsgemäß erzielte Ersparnis an Reinigungsaktionen ist daher umso größer, je schmäler der zu prüfende Teilbereich bzw. die zu prüfenden Teilbereiche der geprüften Wertdokumente sind.

Bei der Prüfung der Verschmutzung des Fensters wird die Lage und Breite des auf Verschmutzung zu prüfenden Teilbereichs des Fensters bevorzugt in Abhängigkeit der Sorte des zu prüfenden Blattguts gewählt. In Banknotenbearbeitungsmaschinen wird, wenn für die verschiedenen Banknotensorten jeweils einer oder mehrere bestimmte Teilbereiche zur Prüfung vorgesehen sind, die Lage und Breite des/der auf Verschmutzung zu prüfenden Messfenster-Teilbereichs/e in Abhängigkeit von der jeweils zu prüfenden Banknotensorte gewählt. Bei stückelungsreinem Betrieb der Banknotenbearbeitungsmaschine, d. h. wenn die zu prüfenden Banknoten alle derselben Sorten angehören, wird erfindungsgemäß ein besonders großer Vorteil erzielt, da in diesem Fall nur der einem bestimmten BanknotenTeilbereich entsprechende Messfenster-Teilbereich auf Verschmutzung zu überwachen ist. Bei nicht stückelungsreinem Betrieb der Banknotenbearbeitungsmaschine, d. h. wenn Banknoten verschiedener Sorten auf Verschmutzung geprüft werden, müssen üblicherweise mehrere Messfenster-Teilbereiche auf Verschmutzung geprüft werden, da die bei verschiedenen Banknoten geprüften Banknoten-Teilbereiche üblicherweise von Banknotensorte zu Banknotensorte variieren. Die Messfenster-Teilbereiche, die bei der Verschmutzungsprüfung miteinbezogen werden müssen, können einander überlappen oder voneinander getrennt sein, je nach Lage und Größe der entsprechenden zu prüfenden Banknoten-Teilbereiche. Da die auf Verschmutzung geprüften Messfenster-Teilbereiche insgesamt deutlich schmäler sind als die Messfenster, wird erfindungsgemäß eine Einsparung an Reinigungsaktionen erzielt.

Wenn das durch die Fensterverschmutzung verursachte remittierte Licht, typischerweise bestehend aus an der Verschmutzung reflektiertem Licht und Streulicht, eine bestimmte Intensitätsschwelle überschreitet, kann der Betrieb der Maschine automatisch unterbrochen werden oder alternativ eine Meldung ausgegeben werden, dass eine Reinigung erforderlich ist. Es kann auch vorgesehen werden, dass diese Schwelle bei mehreren aufeinander folgenden Verschmutzungsprüfungen überschritten werden muss, um eine Betriebsunterbrechung der Maschine bzw. eine Meldung, dass eine Reinigung erforderlich ist, zu veranlassen. Mit der Betriebsunterbrechung, der Maschine kann auch eine automatische Reinigung des Messferisters oder der Messfenster ausgelöst werden, beispielsweise durch Blasluft.

Diese Ausführungen gelten natürlich analog, wenn zur Messung der Fensterverschmutzung nicht das von den Fenstern remittierte Licht, sondern das durch die Fenster transmittierte Licht herangezogen wird. Auch hier werden erfindungsgemäß jeweils nur die Teilbereiche der Messfenster, die bei der Prüfung der Blattguts eine Rolle spielen, auf Verschmutzung geprüft.

Wie bereits erwähnt, ist der zur Prüfung des Blattguts verwendete optische Sensor eine Sensorzeile, die sich über eine Breite erstreckt, die der Breite des breitesten potenziell zu prüfenden Blattguts entspricht. Die Prüfung des Blattguts kann als Remissionsmessung durchgeführt werden und/oder als Transmissionsmessung durchgeführt werden. Die Verschmutzungsprüfung der Messfenster kann ebenfalls als Remissionsmessung und/oder als Transmissionsmessung durchgeführt werden, wobei die Transmissionsmessung bevorzugt als Dunkelfeld-Transmissionsmessung durchgeführt wird. Der für die Prüfung des Blattguts und für die Prüfung der Fensterverschmutzung verwendete Spektralbereich ist bevorzugt derselbe Spektralbereich, d. h. Licht im sichtbaren Bereich, IR-Bereich oder UV-Bereich. Die Messungen können "symmetrisch" durchgeführt werden, wobei gleichzeitig beide Oberflächen eines Blattguts auf die jeweiligen Eigenschaften geprüft werden. Auch die Messung der Fensterverschmutzung kann beidseitig vorgenommen werden. Die Messvorrichtung zur Prüfung des Blattguts kann hinsichtlich Lichtquellen, Sensoren und ggf. Filtern und Linsensystemen im Wesentlichen symmetrisch ausgebildet sein, mit dem Blattgut-Transportweg als Symmetrieebene.

Die Verschmutzungsprüfung des Messfensters findet in Phasen statt, d.h. in solchen Zeitabschnitten, in denen sich kein Blattgut im Erfassungsbereich der Sensorzeile befindet. Hinsichtlich des zeitlichen Ablaufs der Prüfung von Blattgut und der Verschmutzungsprüfung der Messfenster gibt es folgende Möglichkeiten: Die Verschmutzungsprüfung kann als gesonderte Messung in einer Vereinzelungspause der Blattgutbearbeitungsmaschine durchgeführt werden oder während der Blattgutprüfung, in der Lücke zwischen zwei an der Messvorrichtung vorbeitransportierten Blättern des Blattguts. Dabei gibt es zwei Varianten für das Detektieren des von dem potenziell verschmutzten Fenster remittierten, oder durch das Fenster transmittierten Lichts. Entweder wird das Licht über die gesamte Breite der Sensorzeile bzw. des Blattguts detektiert, aber von den detektierten Lichtsignalen nur diejenigen Lichtsignale ausgewertet, die auf denjenigen Teilbereich des Fensters zurückzuführen sind, der dem bei der Prüfung des Blattguts relevanten Teilbereich des Blattguts entspricht. Bei der zweiten Variante wird von vorne herein nur das Licht detektiert, das auf den Fensterbereich zurückzuführen ist, der dem für die Prüfung des Blattguts relevanten Teilbereich entspricht.

Alternativ wird die Verschmutzungsprüfung des Messfensters nicht als eine gesonderte Messung zu einem Zeitpunkt, zu dem sich kein Blattgut im Erfassungsbereich der Sensorzeile befindet, durchgeführt. Vielmehr wird zur Prüfung der Blätter eines Blattguts jede Einzelmessung eines Blatts über einen etwas längeren Zeitraum durchgeführt, als es bei der jeweiligen Transportgeschwindigkeit zur Aufnahme eines Bild des Blatts erforderlich wäre. Das aufgenommene Bild enthält daher nicht nur das Blatt selbst, sondern deckt in Transportrichtung betrachtet einen etwas größeren Bereich ab als das Blatt, so dass auf dem Bild auch ein Abschnitt vor oder nach dem Blatt enthalten ist. Dieser Abschnitt des aufgenommenen Bilds kann daher zusätzlich auch zur Verschmutzungsprüfung des oder der Messfenster verwendet werden. Für die Verschmutzungsprüfung des Messfensters in dem Teilbereich, der für die Prüfung des Wertdokuments relevant ist, wird dann ein entsprechender zweidimensionaler Bildbereich ausgewertet, der in dem aufgenommenen Bild neben dem Wertdokument angeordnet ist, d.h. zeitlich vor oder nach dem Wertdokument aufgenommen wurde. Der Bildbereich stellt den Fensterbereich dar, der hinsichtlich seiner Breite und Lage im Strahlengang des Lichts dem geprüften Bereich des Blattguts entspricht, anhand dessen das Blatt zum Beispiel auf Echtheit, Sorte oder Benutzungszustand geprüft wird. Die Länge des Bildbereichs entlang der Transportrichtung kann beliebig gewählt werden, solange der Bildbereich vollständig auf dem Bild vorhanden und außerhalb des Bilds des Blatts angeordnet ist.

Der Vorteil dieser Alternative ist, dass Vereinzelungspausen der Maschine, die bisher für die Verschmutzungsmessung der Messfenster gemacht werden müssen, entfallen. Stattdessen kann das bei der Prüfung einer Banknote (oder eines sonstigen Blattguts) aufgenommene Bild dazu verwendet werden, die Fensterverschmutzung zu überprüfen. Eine Überprüfung jeder Banknote ist allerdings üblicherweise nicht erforderlich. Vielmehr ist es ausreichend, wenn in regelmäßigen Abständen, d.h. nach einer bestimmten Anzahl von Banknoten, ein aufgenommenes Bild zur Fenster-Verschmutzungsprüfung herausgegriffen wird und ausgewertet wird; beispielsweise jedes hundertste Bild. Alternativ kann auch eine gemeinsame Auswertung mehrerer Bilder der relevanten Fenster-Teilbereiche durchgeführt werden.

Die Erfindung wird nachfolgend anhand von Figuren noch näher erläutert. Es versteht sich, dass die Figuren lediglich der Veranschaulichung der Erfindung dienen und nicht beschränkend zu verstehen sind. Die Figuren sind schematisch und weder maßstabs- noch proportionsgetreu. Gleiche Bezugsziffern bezeichnen gleiche oder entsprechende Elemente. In den Figuren zeigen:
Fig. 1 eine schematische Darstellung einer erfindungsgemäßen Blattgutbearbeitungsvorrichtung mit einer erfindungsgemäßen Messvorrichtung zur Durchführung der erfindungsgemäßen Verschmutzungsprüfung im Querschnitt,
Fig. 2 eine Aufsicht auf ein Messfenster einer Messvorrichtung gemäß dem Stand der Technik mit darunter angeordnetem Wertdokument (Fig. 2b) und eine Aufsicht auf deren Sensorzeile (Fig. 2a), und
Fig. 3 eine Aufsicht auf ein Messfenster einer erfindungsgemäßen Messvorrichtung mit darunter angeordnetem Wertdokument (Figl. 3b) und eine Aufsicht auf deren Sensorzeile (Fig. 3a), und
Fig. 4 eine Aufsicht auf ein Bild eines Wertdokuments mit den zu prüfenden Teilbereichen des Wertdokuments und mit gleichzeitig aufgenommenem Messfenster-Teilbereich gemäß einer Ausführungsform der vorliegenden Erfindung.

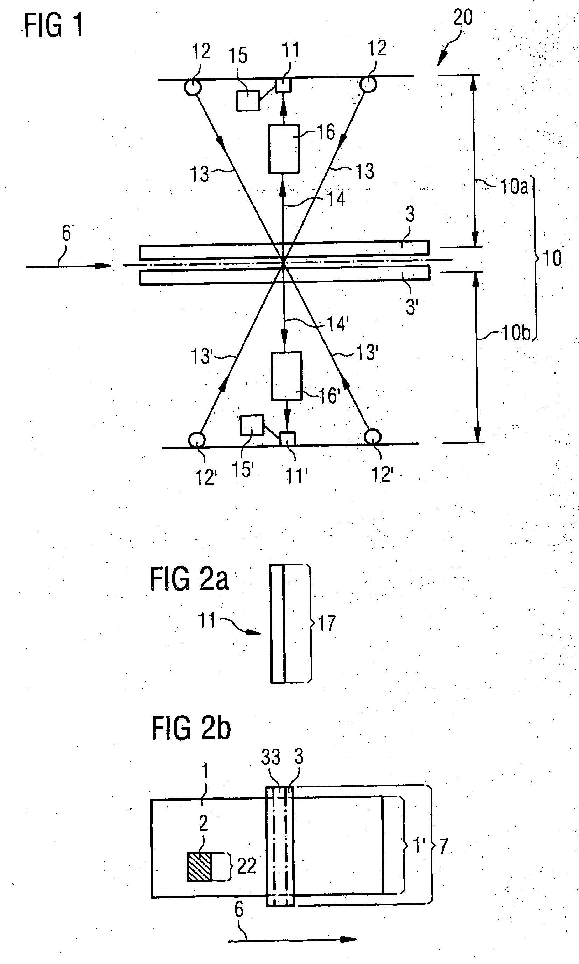

Fig. 1 zeigt schematisch und im Querschnitt eine Messvorrichtung 10, die in einer Blattgut-Bearbeitungsvorrichtung 20 enthalten ist. Dargestellt sind nur die für die vorliegende Erfindung wesentlichen Bestandteile der Bearbeitungsvorrichtung 20, nämlich der Transportweg 6 des zu prüfenden Blattguts 1 und die Messvorrichtung 10 zur Prüfung des Blattguts, das auf dem Transportweg 6 durch die Bearbeitungsvorrichtung 20 transportiert wird. In der dargestellten Ausführungsform ist die Messvorrichtung 10 zweiteilig, d. h. sie besteht aus einer Einheit 10a und einer Einheit 10b, die an entgegengesetzten Seiten des Transportwegs 6 angeordnet sind. Diese symmetrische Anordnung ist eine bevorzugte Ausführungsform, da auf diese Weise das Blattgut 1 gleichzeitig von beiden Seiten geprüft werden kann, aber es ist grundsätzlich auch möglich, das erfindungsgemäße Verfahren mit einer Messvorrichtung 10 durchzuführen, die nur aus der Einheit 10a oder nur aus der Einheit 10b besteht. Im Folgenden wird die Prüfung des Blattguts 1 und der Messfenster-Verschmutzung anhand einer Remissionsmessung beschrieben, es ist aber auch möglich, diese anhand einer Transmissionsmessung durchzuführen.

Die Einheit 10a der erfindungsgemäßen Messvorrichtung 10 besteht aus zwei Lichtquellen 12, einem Linsensystem 16, einer Sensorzeile 11, einer Auswerteeinrichtung 15 und einem Messfenster 3. Das zu prüfende Blattgut (nicht gezeigt) wird entlang des durch eine strichpunktierte Linie angegebenen Transportwegs 6 durch die Vorrichtung 20 hindurchgeführt. Der Pfeil gibt die Transportrichtung an. Im Folgenden wird angenommen, dass es sich bei dem Blattgut um Banknoten handelt. Die Banknoten werden im Laufe des Transports an dem Messfenster 3 vorbeigeführt, bzw. zwischen den Messfenstern 3, 3' hindurchgeführt, und dabei von den Lichtquellen 12 mit dem Licht 13 bestrahlt, wobei die Lichtquellen 12 so angeordnet sind, dass sie auf eine vorbestimmte Stelle des Fensters 3 ausgerichtet sind. Das Licht 13 trifft auf die vorbeitransportierte Banknote auf und wird zu einem bestimmten Teil als Licht 14 remittiert. Das Licht 14 wird von der Sensorzeile 11 detektiert und in Lichtsignale umgesetzt, und ein bestimmter Teil der Lichtsignale wird von der Auswerteeinheit 15 der Messvoirichtung 10 ausgewertet. Die Sensorzeile 11 ist beispielsweise eine CMOS-, eine CCD- oder eine Photodiodenzeile. Die Auswerteeinrichtung 15 ist beispielsweise ein Mikroprozessor. Für die optische Abbildung ist es bevorzugt, vor der Sensorzeile 11 ein Linsensystem 16 vorzusehen, beispielsweise linear angeordnete Gradientenlinsen, die eine 1:1-Abbildung auf der Sensorzeile 11 erzeugen.

Die durch die Bearbeitungsvorrichtung 20 transportierten Banknoten werden nicht vollflächig, d. h. nicht an ihren gesamten Oberflächen, geprüft. Zum Beispiel werden bei einer Verschmutzungsprüfung der Banknoten nur diejenigen Teilbereiche der Oberfläche auf Verschmutzung geprüft, bei denen derartige Verschmutzungen als besonders störend empfunden werden. Deshalb werden von den Lichtsignalen, die die Sensorzeile 11 von der vorbeitransportierten Banknote detektiert, nicht alle von der Auswerteeinrichtung 15 ausgewertet, sondern eine Auswertung findet nur für bestimmte Lichtsignale statt, nämlich für die Lichtsignale des Lichts, das von den vorbestimmten Teilbereichen der Banknote, die auf Verschmutzung geprüft werden sollen, remittiert wird. Neben der Verschmutzungsprüfung in dem betrachteten Teilbereich der Banknote kann die Banknote anhand der Lichtsignale der Sensorzeile gleichzeitig auch vollflächig oder in anderen Teilbereichen auf andere Eigenschaften geprüft werden, wenn die Verschmutzung des Messfensters die Prüfung dieser anderen Eigenschaften weniger beeinträchtigt.

Wenn sich gerade keine Banknote im Strahlengang des Lichts 13 befindet, wird das Licht dennoch zu einem gewissen Teil remittiert und von der Sensorzeile 11 detektiert. Verantwortlich dafür ist das Fenster 3 bzw. derjenige Teilbereich des Fensters 3, der sich im Strahlengang des zur Prüfung der Banknote verwendeten Lichts befindet. Bei einer symmetrischen Anordnung der Messvorrichtung 10 beidseitig des Transportwegs 6 der Banknote sind es dementsprechend beide Fenster 3, 3'. Je stärker die Verschmutzung dieser prüfungsrelevanten Teilbereiche der Fenster, die bei der Prüfung der Banknote im Strahlengang des Lichts liegen, ist, desto mehr Licht wird remittiert und von der Sensorzeile detektiert. Das Messfenster 3 ist in der Regel etwas breiter als das breiteste Wertdokument, das mit der Messvorrichtung 10 geprüft werden soll. Die Sensorzeile 11 erstreckt sich quer zur Transportrichtung der Wertdokumente und hat mindestens die Breite des breitesten Wertdokuments, das geprüft werden soll.

Messvorrichtungen des Stands der Technik sind so konfiguriert, dass die Sensorzeile 11 während des Vorbeitransportierens des Wertdokuments kontinuierlich das auf sie auftreffende Licht 14 detektiert. In Phasen, in denen sich keine Banknote im Detektionsbereich der Sensorzeile 11 befindet, werden bisher die Lichtsignale von der Auswerteeinrichtung 15 über die gesamte Breite der Sensorzeile 11 ausgewertet. Wenn sich an irgendeiner Stelle im Bereich des Fensters 3, der im Strahlengang des Lichts liegt, eine Verschmutzung befindet, wird diese bei den bisherigen Messvorrichtungen berücksichtigt und eine Reinigung des Fensters durchgeführt.

Erfindungsgemäß wurde festgestellt, dass bei dieser Vorgehensweise zahlreiche unnötige Reinigungsaktionen durchgeführt werden. Die Verschmutzung liegt nämlich häufig in einem Bereich des Fensters 3, der bei der Prüfung der Banknote überhaupt keine Rolle spielt, da er nicht im Strahlengang des Lichts zwischen Lichtquelle 12 und dem zu prüfenden Teilbereich der Banknote bzw. dem zu prüfenden Teilbereich der Banknote und der Sensorzeile 11 liegt. Eine Reinigung des Fensters 3 muss nur dann durchgeführt werden, wenn der prüfungsrelevante Teilbereich des Fensters verschmutzt ist. Um die Fensterreinigung zu veranlassen sorgt z.B. die Auswerteeinrichtung 15 dafür, dass die Messvorrichtung 10 ein entsprechendes Signal an die Vorrichtung 20 sendet.

Die Messvorrichtung 10 kann so konfiguriert sein, dass die Sensorzeile 11 zwar über den gesamten Bereich ihrer Breite Lichtsignale detektiert, aber die Auswerteeinrichtung 15 die von der Sensorzeile detektierten Lichtsignale nur für einen vorgegebenen Teilbereich der Sensorzeile auswertet. Ausgewertet werden einerseits die Lichtsignale, die von dem zu prüfenden Teilbereich der Banknote ausgehen, und andererseits, wenn sich keine Banknote im Detektionsbereich der Sensorzeile befindet, die Lichtsignale, die von dem Fensterbereich ausgehen, der bei der Prüfung der Banknote im Strahlengang des ausgewerteten Lichts liegt.

Alternativ kann die Messvorrichtung so konfiguriert sein, dass in Phasen, in denen keine Banknote im Detektionsbereich der Sensorzeile vorhanden ist, die Sensorzeile 11 nur über einen Teilbereich ihrer Breite Lichtsignale detektiert und die Auswerteeinrichtung diese von der Sensorzeile detektierten Lichtsignale auswertet. Auch auf diese Weise wird erreicht, dass, wenn sich keine Banknote im Detektionsbereich der Sensorzeile befindet, nur die Lichtsignale ausgewertet werden, die von dem Fensterbereich ausgehen, der bei der Prüfung der Banknote im Strahlengang des Lichts liegt, das für die Prüfung der Banknote ausgewertet wird. In jedem Fall werden Verschmutzungen in Fensterbereichen, die bei der Prüfung der Banknote keine Rolle spielen, nicht berücksichtigt, und unnötige Reinigungsaktionen der Fenster daher vermieden.

Die Funktionsweise der Messvorrichtung 10 wurde oben anhand der Einheit 10a beschrieben. Die Einheit 10b mit den Lichtquellen 12', der Sensorzeile 11', der Auswerteeinrichtung 15', dem Linsensystem 16' und dem Messfenster 3' arbeitet in analoger Weise. Die Lichtquellen 12' sind so angeordnet, dass sie Licht 13' auf dieselbe Stelle der Banknote richten, auf die das Licht 13 der Lichtquellen 12 gerichtet ist, jedoch aus der entgegengesetzten Richtung, so dass die andere Oberfläche des transportierten Blattguts 1 geprüft werden kann. Das Blattgut 1 remittiert Licht 14', das von der Sensorzeile 11' detektiert und von der Auswerteeinrichtung 15' ausgewertet wird. In Abwesenheit von Blattgut 1 wird das Licht 14' von den Fenstern remittiert, so dass diese auf Verschmutzung geprüft werden können.

Die Messvorrichtung 10 ist auch für die Verschmutzungsprüfung in Transmission geeignet. Bei einer Messung in Transmission strahlen die Lichtquellen 12 Messlicht 13 auf das Fenster 3 und die daran vorbeigeführte Banknote, und das transmittierte Licht wird als Licht 14' von der Sensorzeile 11' detektiert und von einer Auswerteeinrichtung 15' ausgewertet. Wenn sich keine Banknote im Detektionsbereich der Sensorzeile 11' befindet, wird bei der Transmissionsmessung in völlig analoger Weise zur Remissionsmessung die Verschmutzung der Messfenster 3,3' gemessen. Die Transmissionsmessung wird bevorzugt als Dunkelfeld-Transmissionsmessung durchgeführt, d.h. die Sensorzeile 11' befindet sich nicht im direkten Strahlengang des von den Lichtquellen 12 ausgesendeten Lichts, sondern in einem Winkel dazu, vgl. Fig. 1.

Fig. 2b zeigt eine Aufsicht auf das Messfenster 3 einer Messvorrichtung 10a in einer Phase, in der sich gerade eine Banknote 1 unter dem Messfenster 3 befindet. Dabei wird lediglich der Teilbereich 2 der Banknote 1 geprüft. Die Banknote 1 hat eine Breite 1' und das Messfenster 3 hat eine Breite 7, die etwas größer ist als die Breite 1' der Banknote. Mit strichpunktierten Linien dargestellt ist der Bereich 33 des Fensters, durch den das von der Banknote 1 ausgehende und zur Prüfung der Banknote von der Sensorzeile 11 detektierte Licht 14 hindurchtritt. Die in Fig. 2a dargestellte Sensorzelle 11 würde in der Aufsicht aus Figur 2b vor dem Fenster 3 angeordnet sein. Sie weist eine Breite 17 auf, die etwas größer ist als die Breite 1' der Banknote, und in der Regel etwa so groß wie die Breite 7 des Fensters ist.

Während die Banknote 1 an dem Fenster vorbeitransportiert wird, detektiert die Sensorzeile 11 das von der Banknote remittierte Licht, d. h. sie nimmt zeilenweise ein Bild der Banknote auf. Zur Prüfung der Banknote werden die detektierten Lichtsignale jedoch nur für das Zeitintervall ausgewertet, in dem das von dem zu prüfenden Teilbereich 2 ausgehende Licht 14 zu der Sensorzeile 11 gelangt. Da der Teilbereich 2 eine relativ geringe Breite 22 hat, wird nur ein Anteil des insgesamt auf die Sensorzeile 11 auftreffenden Lichts zur Prüfung der Banknote ausgewertet.

Anschließend wird die nächste Banknote an dem Messfenster vorbeigeführt. Zwischen zwei Banknoten oder sonstigem Blattgut gibt es jeweils eine kurze Detektionspause der Sensorzeile 11. Diese Detektionspausen können dazu genutzt werden, zu prüfen, ob evtl. die Messfenster verschmutzt sind. Gemäß Stand der Technik wird zu diesem Zweck Licht in derselben Weise wie bei der Prüfung des Blattguts auf das Messfenster 3 aufgestrahlt, und das remittierte oder das transmittierte Licht von der Sensorzeile 11 detektiert und von der Auswerteeinrichtung 15 ausgewertet. Zur Verschmutzungsprüfung des Messfensters 3 wird bisher jeweils das gesamte Licht ausgewertet, das die Sensorzeile 11 detektiert, d. h. das gesamte von dem Bereich 33 remittierte oder durch den Bereich 33 transmittierte Licht. Verschmutzungen des Bereichs 33 sind aber nur dann störend, wenn sie in dem Teil des Bereichs 33 liegen, der hinsichtlich seiner Lage im Strahlengang des Lichts dem Bereich 2 des Blattguts 1 entspricht. Dieser Bereich hat nur eine Breite 22, und bei allen Verschmutzungen, die außerhalb des betreffenden Bereichs liegen, wird gemäß Stand der Technik dennoch eine Fensterreinigung durchgeführt.

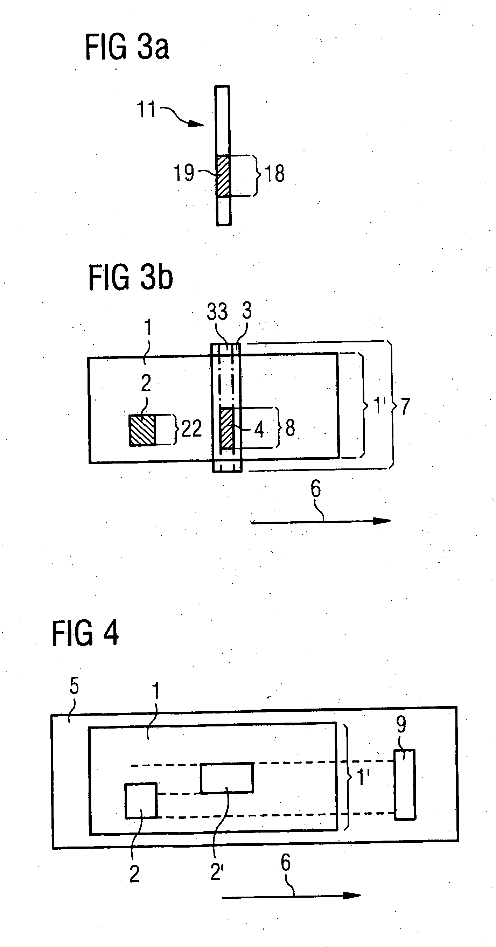

Die erfindungsgemäße Lösung ist in Fig. 3b veranschaulicht. In Fig. 3b ist wiederum eine Aufsicht auf ein Messfenster 3 mit einer Breite 7 in einer Phase dargestellt, in der gerade eine Banknote 1 in Transportrichtung 6 an dem Messfenster 3 vorbeitransportiert und dabei geprüft wird. Die Banknote 1 hat die Breite 1' und einen zu prüfenden Teilbereich 2 mit einer Breite 22. Der Bereich des Fensters 3, durch den das von der Sensorzeile 11 zu detektierende Licht hindurchtritt, ist wiederum mit der Bezugsziffer 33 bezeichnet und strichpunktiert dargestellt. In Figur 3a ist die Sensorzeile 11 dargestellt, die sich bei der Aufsicht aus Figur 3b vor dem Fensterbereich 33 befinden würde.

Erfindungsgemäß wird nun die Prüfung der Banknote 1 prinzipiell durchgeführt wie im Zusammenhang mit Fig. 2 erläutert, und auch erfindungsgemäß wird die Phase bzw. der Zeitabschnitt zwischen zwei Wertdokumenten genutzt, um die Fensterverschmutzung zu prüfen. Abweichend von der bisherigen Vorgehensweise wird jedoch nicht das gesamte Licht ausgewertet, das die Sensorzeile 11 durch den Fensterbereich 33 erreicht, sondern es wird nur ein Teil dieses Lichts ausgewertet, nämlich das Licht, das durch den Teilbereich 4 des Fensters hindurchtritt, durch den bei der Prüfung der Banknote 1 das zur Prüfung der Banknote verwendete Licht zu der Sensorzeile 11 gelangt. Hinsichtlich seine Breite und hinsichtlich seiner Lage im Strahlengang des Lichts entspricht der Teilbereich 4 des Fensters dem geprüften Teilbereich 2 der Banknote 1. Dieser Teilbereich 4 des Fensters hat eine Breite 8, die gleich der Breite 22 des Teilbereichs 2 der Banknote sein kann, aber auch etwas größer gewählt werden kann, beispielsweise bis etwa 10 % größer, um Transportschwankungen beim Transportieren der Banknoten auszugleichen. Auf diese Weise bleiben sämtliche Verschmutzungen des Fensters 3, die außerhalb des Fenster-Teilbereichs 4 liegen, unberücksichtigt. So kann eine Vielzahl unnötiger Reinigungsaktionen eingespart werden.

Alternativ ist es auch möglich, in den Phasen, in denen die Verschmutzungsprüfung der Fenster durchgeführt wird, nur einen Teilbereich der Sensorzeile 11 zu aktivieren, d. h. den Teilbereich 19 mit der Breite 18. Der Teilbereich 19 ist der Teilbereich der Sensorzeile 11, der das Licht detektiert, das bei der Prüfung der Banknote von dem Teilbereich 2 ausgeht, und das entsprechend bei der Verschmutzungsprüfung der Fenster von dem Teilbereich 4 ausgeht. Der Bereich 19 hat eine Breite 18, die mindestens so groß ist wie die Breite 22 des Teilbereichs 2, aber bevorzugt ist der Teilbereich 19 etwas breiter, um eventuelle Transportschwankungen der Banknote 1 auszugleichen. Die Breite 18 ist vorteilhafterweise etwa so groß gewählt wie die Breite 8 des Fenster-Teilbereichs 4, d. h. bis etwa 10 % größer als die Breite 22.

Alternativ können auch zur Prüfung des Blattguts 1 nur der Teilbereich 19 der Sensorzeile 11 zur Detektion von Lichtsignalen aktiviert sein und nur die von dem Bereich 19 detektierten Lichtsignale von der Auswerteeinrichtung 15 zur Prüfung des Blattguts 1 ausgewertet werden.

Das zu prüfende Blattgut wird durch die Sensorenzeile 11 der Messvorrichtung 10 üblicherweise vollflächig abgerastert, um auch andere Eigenschaften des Blattguts zu prüfen. Zum Beispiel wird die Echtheit und/oder die Sorte des Blattguts vollflächig geprüft, aber die Verschmutzung des Blattguts nur in dem Teilbereich 2. Üblicherweise wird jede Messung etwas länger durchgeführt, als es der Länge des zu prüfenden Blattguts entspricht. D. h. die Abrasterung beginnt bereits zu einem Zeitpunkt, zu dem sich noch kein Blattgut, beispielsweise eine Banknote, im Detektionsbereich der Sensorzeile 11 befindet, und sie endet erst zu einem Zeitpunkt, der nach dem Zeitpunkt liegt, zu dem das Blattgut den Detektionsbereich der Sensorzeile 11 verlassen hat. Die von einer Sensorzeile 11 aufgenommenen Bilder sind daher länger als das Bild des Blatts selbst und das Blatt-Bild wird, in Transportrichtung gesehen, beidseitig von einem bisher "ungenutzten Randbereich" flankiert. Der Bildbereich neben dem Blatt-Bild kann nun vorteilhaft zur Verschmutzungsprüfung der Messfenster verwendet werden.

Das bei der Abrasterung aufgenommene Bild 5 ist in Fig. 4 dargestellt. Die Banknote 1 wird hier wiederum in Richtung des Pfeils 6 durch die Blattgutbearbeitungsvorrichtung 20 transportiert und dabei zur Prüfung der Banknote 1 das Bild 5 aufgenommen. Da die Detektion des Lichts 14 bereits beginnt, bevor die Banknote 1 den Detektionsbereich der Sensorzeile 11 erreicht, detektiert die Sensorzeile 11, bis zum Eintreffen der Banknote 1 im Detektionsbereich der Sensorzeile 11, automatisch das von dem Messfenster 3 ausgehende, z.B. gestreute Licht. Gemäß einer bevorzugten Ausführungsform wird ein Bildbereich vor der eigentlichen Messung der Banknote (in Fig. 4 rechts dargestellt) und/oder ein Bildbereich nach der eigentlichen Messung der Banknote (dieser würde in Fig. 4 links von der Banknote liegen) zur Verschmutzungsprüfung der Fenster 3 genutzt. Dabei wird grundsätzlich vorgegangen wie vorstehend erläutert, d. h. es kann sowohl in Remission als auch in Transmission gemessen werden, und es wird nur der Teilbereich der Messfenster 3 auf Verschmutzung geprüft, der hinsichtlich seiner Breite und seiner Lage im Strahlengang des Lichts dem geprüften Teilbereich der Banknote entspricht. Dieser Teilbereich wird entweder dadurch festgelegt, dass das auf die Sensorzeile 11 auftreffende Licht zwar über die gesamte Breite 17 der Sensorzeile detektiert wird, aber nur für einen Bereich 19 (wie in Fig. 3a dargestellt) ausgewertet wird, oder dadurch, dass das auf die Sensorzeile 11 auftreffende Licht von vornherein nur in dem Bereich 19 detektiert wird, und daher von der Auswerteeinrichtung 15 auch nur für den Bereich 19 ausgewertet werden kann.

In Fig. 4 ist eine Banknote 1 dargestellt, bei der ein Teilbereich 2 und ein Teilbereich 2' auf Verschmutzung geprüft werden sollen. Die beiden Teilbereiche überlappen einander, sind aber insgesamt breiter als jeder der Teilbereiche für sich genommen. In einem solchen Fall muss ein Fensterbereich auf Verschmutzung geprüft werden, der hinsichtlich seiner Breite und seiner Lage im Strahlengang des Lichts der Lage und der Gesamtbreite der Teilbereiche 2, 2' entspricht, bzw. etwas größer ist, um gegebenenfalls Transportschwankungen der Banknote 1 auszugleichen. In Fig. 4 ist der geprüfte Fensterbereich als Bildbereich 9 dargestellt, wobei ersichtlich ist, dass der Bildbereich 9 zwar eine Breite hat, die etwas größer ist als die Gesamtbreite der Teilbereiche 2 und 2', aber immer noch deutlich schmäler ist als die Breite des Wertdokuments 1, so dass auch hier eine Einsparung an Reinigungsvorgängen erzielt wird. Eine Reinigung der Fenster 3 wird nur dann veranlasst, wenn in dem aufgenommenen Bildbereich 9 der Fenster 3 eine Verschmutzung festgestellt wird. Durch diese Integration der Verschmutzungsmessung der Fenster in den Zeitraum zur Aufnahme des Bilds der Banknote, wird erreicht, dass keine Pausen für eine Verschmutzungsmessung der Fenster benötigt werden, was den Banknotendurchsatz durch die Bearbeitungsmaschine in vorteilhafter Weise erhöht.

## Patentansprüche

1. Verfahren zur Verschmutzungsprüfung eines Fensters einer Messvorrichtung (10), die zur Prüfung von Blattgut (1) ausgebildet ist, das zu dessen Prüfung entlang eines Transportwegs (6) an der Messvorrichtung vorbeitransportiert wird, und die
- mindestens eine Lichtquelle (12) zum Bestrahlen des Blattguts (1),
- mindestens eine Sensorzeile (11) zum Detektieren des von dem Blattgut ausgehenden Lichts (14), wobei die Sensorzeile (11) mindestens die Breite (1') des Blattguts hat,
- mindestens eine Auswerteeinrichtung (15) zur Auswertung von Lichtsignalen, die von der Sensorzeile (11) beim Detektieren des Lichts (14) detektiert wurden, und
- mindestens ein Fenster (3) zwischen der Sensorzeile (11) und dem Transportweg (6) des Blattguts aufweist,
wobei in Phasen, in denen sich Blattgut (1) im Detektionsbereich der Sensorzeile (11) befindet, die Messvorrichtung (10) eine Prüfung des Blattguts durchführt, bei der das Blattgut nicht vollflächig geprüft wird, sondern nur mindestens ein Teilbereich (2) jedes Blatts des Blattguts, der eine vorgegebene Länge und Breite (22) hat und insgesamt schmäler ist als die Breite (1') des Blattguts, durch Detektieren und Auswerten des von dem mindestens einen Teilbereich (2) des Blatts ausgehenden Lichts (14) geprüft wird, und wobei in Phasen, in denen sich kein Blattgut (1) im Detektionsbereich der Sensorzeile (11) befindet, von dem Fenster (3) ausgehendes Licht zur Verschmutzungsprüfung des Fensters (3) detektiert und ausgewertet wird, **dadurch gekennzeichnet, dass** zur Verschmutzungsprüfung des Fensters (3) nur das Licht (14) ausgewertet wird, das von einem Teilbereich (4) des Fensters (3) ausgeht, durch den bei der Prüfung des Blattguts das Licht (14) zu der Sensorzeile (11) gelangt und der hinsichtlich seiner Breite (8) und seiner Lage im Strahlengang des Lichts (14) dem mindestens einen bei der Prüfung des Blattguts geprüften Teilbereich (2) des Blattguts (1) entspricht.

2. Verfahren nach Anspruch 1, **dadurch gekennzeichnet, dass** zur Prüfung des Blattguts jeweils ein Bild (5) eines Blatts des Blattguts aufgenommen wird, das eine größere Länge hat als das Blatt, und zur Verschmutzungsprüfung des Fensters (3) ein auf dem Bild neben dem Blatt angeordneter Bildbereich (9) ausgewertet wird, der den Teilbereich (4) des Fensters (3) darstellt, durch den bei der Prüfung des Blattguts (1) das Licht (14) zu der Sensorzeile gelangt und der hinsichtlich seiner Breite und seiner Lage im Strahlengang, des Lichts (14) dem mindestens einen geprüften Teilbereich (2) des Blattguts entspricht.

3. Verfahren nach Anspruch 1 oder 2, **dadurch gekennzeichnet, dass** das von dem Teilbereich (4) des Fensters (3) ausgehende Licht (14) ein durch das Fenster (3) remittiertes Licht ist und/oder ein durch das Fenster (3) transmittiertes Licht ist.

4. Verfahren nach einem der Ansprüche 1 bis 3, **dadurch gekennzeichnet, dass** der Teilbereich (4) des Fensters (3), von dem das Licht (14) ausgeht, das zur Prüfung einer Verschmutzung des Fensters (3) ausgewertet wird, eine geringere Breite aufweist als die Breite des geprüften Blattguts (1).

5. Verfahren nach einem der Ansprüche 1 bis 4, **dadurch gekennzeichnet, dass** der Teilbereich (4) des Fensters (3), von dem das Licht (14) ausgeht, das zur Prüfung einer Verschmutzung des Fensters (3) ausgewertet wird, eine geringere Breite aufweist als der Bereich des Fensters (3), durch den bei der Prüfung des Blattguts (1) Licht (14) zu der Sensorzeile (11) gelangt.

6. Verfahren nach einem der Ansprüche 1 bis 5, **dadurch gekennzeichnet, dass**, bei der Prüfung der Verschmutzung des Fensters (3), die Lage und Breite des auf Verschmutzung zu prüfenden Teilbereichs (4) des Fensters (3) in Abhängigkeit der Sorte des geprüften Blattguts gewählt wird.

7. Verfahren nach einem der Ansprüche 1 bis 6, **dadurch gekennzeichnet, dass** mindestens zwei Teilbereiche (2, 2') jedes Blatts des Blattguts von der Messvorrichtung (10) geprüft werden, und dass ein Teilbereich (4) oder Teilbereiche des Fensters (3) auf Verschmutzung geprüft wird (werden), durch den (die) bei der Prüfung des Blattguts (1) das Licht (14) zu der Sensorzeile (11) gelangt, und der (die) hinsichtlich seiner (ihrer) Breite und seiner (ihrer) Lage im Strahlengang des Lichts (14) den geprüften Teilbereichen (2, 2') des Blattguts (1) entspricht (entsprechen), der (die) aber eine geringere Breite aufweist (aufweisen) als der Bereich des Fensters (3), durch den bei der Prüfung des Blattguts (1) Licht (14) zu der Sensorzeile (11) gelangt.

8. Verfahren nach einem der Ansprüche 1 bis 7, **dadurch gekennzeichnet, dass** bei der Prüfung des Blattguts von jedem Blatt des Blattguts ein Bild (5) aufgenommen wird, das eine größere Länge hat als das Blattgut, und, zur Prüfung einer Verschmutzung des Fensters (3) der Messvorrichtung (10), entweder das Bild (5) jedes Blatts des Blattguts ausgewertet wird oder in regelmäßigen Abständen ein Bild (5) eines Blatts des Blattguts ausgewertet wird oder die Bilder (5) mehrerer Blätter des Blattguts gemeinsam ausgewertet werden.

9. Verfahren nach einem der Ansprüche 1 bis 8, **dadurch gekennzeichnet, dass** durch die Messvorrichtung (10) in Abhängigkeit eines Ergebnisses der Verschmutzungsprüfung automatisch eine Reinigung des Fensters (3) veranlasst wird, insbesondere wenn die bei der Verschmutzungsprüfung festgestellte Verschmutzung des Fensters (3) einen festgelegten Schwellenwert überschreitet oder mehrmals nacheinander überschreitet.

10. Messvorrichtung (10) zur Prüfung von Blattgut (1), das zu dessen Prüfung entlang eines Transportwegs (6) an der Messvorrichtung (10) vorbeitransportiert wird, aufweisend
- mindestens eine Lichtquelle (12) zum Bestrahlen des Blattguts (1),
- mindestens eine Sensorzeile (11) zum Detektieren des von dem Blattgut ausgehenden Lichts (14), die mindestens die Breite (1') des Blattguts hat,
- mindestens ein Fenster (3), das zwischen der Sensorzeile (11) und dem Transportweg (6) des Blattguts angeordnet ist,
- mindestens eine Auswerteeinrichtung (15) zum Auswerten von Lichtsignalen, die von der Sensorzeile (11) beim Detektieren des Lichts (14) detektiert werden,
wobei
- das Fenster (3), die Lichtquelle (12) und die Sensorzeile (11) so angeordnet sind, dass bei Betrieb der Messvorrichtung (10) die Lichtquelle (12) Licht (13) auf das Fenster (3) und gegebenenfalls dem Fenster benachbart angeordnetes Blattgut (1) strahlt, und die Sensorzeile (11) von dem Fenster (3) und gegebenenfalls dem Blattgut- (1) ausgehendes, Licht (14) detektiert,
und
- die Auswerteeinrichtung (15) zur Prüfung des Blattguts (1) dazu ausgelegt ist, das Blattgut nicht vollflächig zu prüfen, sondern nur mindestens einen Teilbereich (2) des zu prüfenden Blattguts, der eine vorgegebene Länge und Breite hat, aber insgesamt schmäler ist als die Breite (1') des Blattguts, durch Detektieren und Auswerten des von dem mindestens einen Teilbereich (2) des Blattguts ausgehenden Lichts (14) zu prüfen,
**dadurch gekennzeichnet, dass** die Auswerteeinrichtung (15) dazu konfiguriert ist, zur Verschmutzungsprüfung des Fensters (3) nur das Licht auszuwerten, das von einem Teilbereich (4) des Fensters (3) ausgeht, durch den bei der Prüfung des Blattguts (1) das Licht (14) zu der Sensorzeile (11) gelangt, und der hinsichtlich seiner Breite (8) und seiner Lage im Strahlengang des Lichts (14) dem mindestens einen geprüften Teilbereich (2) des Blattguts (1) entspricht.

11. Messvorrichtung (10) nach Anspruch 10, **dadurch gekennzeichnet, dass** die Messvorrichtung (10) dazu konfiguriert ist, zur Prüfung des Blattguts ein Bild (5) eines Blatts des Blattguts aufzunehmen, das eine größere Länge hat als das Blatt, und dass die Auswerteeinrichtung (15) dazu konfiguriert ist, zur Verschmutzungsprüfung des Fensters (3) einen auf dem Bild (5) neben dem Blatt angeordneten Bildbereich (9) auszuwerten, der den Teilbereich (4) des Fensters (3) darstellt, durch den bei der Prüfung des Blattguts (1) das Licht (14) zu der Sensorzeile gelangt, und der außerdem hinsichtlich seiner Breite und seiner Lage im Strahlengang des Lichts (14) dem mindestens einen zu prüfenden Teilbereich (2) des Blattguts entspricht.

12. Messvorrichtung (10) nach Anspruch 10 oder 11, **dadurch gekennzeichnet, dass** die Messvorrichtung (10) zur Messung der Remission des Blattguts und des von dem Fenster (3) remittierten Lichts ausgebildet ist, und/oder dass die Messvorrichtung (10) zur Messung der Transmission des Blattguts und des durch das Fenster (3) transmittierten Lichts ausgebildet ist.

13. Messvorrichtung (10) nach Anspruch 12, **dadurch gekennzeichnet, dass** sie dazu ausgelegt ist, zur Prüfung einer Verschmutzung des Fensters (3) ein Bild (5) jedes Blatts des Blattguts auszuwerten oder in regelmäßigen Abständen ein Bild (5) eines Blatts des Blattguts auszuwerten oder die Bilder (5) mehrerer Blätter des Blattguts gemeinsam auszuwerten.

14. Messvorrichtung (10) nach einem der Ansprüche 10 bis 13, **dadurch gekennzeichnet, dass** sie dazu konfiguriert ist, in Abhängigkeit eines Ergebnisses der Verschmutzungsprüfung automatisch eine Reinigung des Fensters (3) zu veranlassen, insbesondere wenn die Auswerteeinrichtung (15) bei der Verschmutzungsprüfung eine Verschmutzung des Fensters (3) feststellt, die einen festgelegten Schwellenwert überschreitet oder mehrmals nacheinander überschreitet.

15. Vorrichtung (20) zur Bearbeitung von Blattgut (1), insbesondere von Wertdokumenten, die dazu ausgelegt ist, Blattgut (1) entlang eines Transportwegs (6) zu transportieren, **dadurch gekennzeichnet, dass** sie eine Messvorrichtung (10) nach einem der Ansprüche 10 bis 14 aufweist, wobei die Messvorrichtung (10) einseitig oder beidseitig des Transportwegs (6) angeordnet ist.

## Claims

1. A method for the soiling check of a window of a measuring apparatus (10) that is formed for checking sheet material (1) that for its check is transported along a transport path (6) past the measuring apparatus, and which has
- at least one light source (12) for irradiating the sheet material (1),
- at least one sensor line (11) for detecting the light (14) emanating from the sheet material, the sensor line (11) having at least the width (1') of the sheet material,
- at least one evaluation device (15) for the evaluation of light signals that were detected by the sensor line (11) upon the detection of the light (14), and
- at least one window (3) between the sensor line (11) and the transport path (6) of the sheet material,
wherein in phases in which sheet material (1) is in the detection region of the sensor line (11), the measuring apparatus (10) carries out a check of the sheet material, upon which the sheet material is not checked over the full area but only at least a partial region (2) of each sheet of the sheet material, which partial region has a specified length and width (22) and altogether is narrower than the width (1') of the sheet material, is checked through detection and evaluation of the light (14) emanating from the at least one partial region (2) of the sheet, and wherein in phases in which no sheet material (1) is in the detection region of the sensor line (11), light emanating from the window (3) is detected and evaluated for the soiling check of the window (3),
**characterized in that** for the soiling check of the window (3) only that light (14) is evaluated that emanates from a partial region (4) of the window (3) through which, upon the check of the sheet material, the light (14) reaches the sensor line (11) and which with respect to its width (8) and its location in the beam path of the light (14) corresponds to that at least one partial region (2) of the sheet material (1) that is checked upon the check of the sheet material.

2. The method according to claim 1, **characterized in that** for the check of the sheet material there is respectively recorded an image (5) of a sheet of the sheet material, which image has a greater length than the sheet, and for the soiling check of the window (3) there is evaluated an image region (9) arranged next to the sheet on the image, which image region represents that partial region (4) of the window (3), through which, upon the check of the sheet material (1), the light (14) reaches the sensor line and which with respect to its width and its location in the beam path of the light (14) corresponds to the at least one checked partial region (2) of the sheet material.

3. The method according to either of claims 1 or 2, **characterized in that** the light (14) emanating from the partial region (4) of the window (3) is a light remitted by the window (3) and/ or a light transmitted through the window (3).

4. The method according to any of claims 1 to 3, **characterized in that** the partial region (4) of the window (3), from which partial region the light (14) emanates that is evaluated for checking a soiling of the window (3), has a smaller width than the width of the checked sheet material (1).

5. The method according to any of claims 1 to 4, **characterized in that** the partial region (4) of the window (3), from which partial region the light (14) emanates that is evaluated for checking a soiling of the window (3), has a smaller width than the region of the window (3) through which, upon the check of the sheet material (1), light (14) reaches the sensor line (11).

6. The method according to any of claims 1 to 5, **characterized in that**, upon the check of the soiling of the window (3), the location and width of that partial region (4) of the window (3) that is to be checked for soiling is chosen in dependence on the type of the checked sheet material.

7. The method according to any of claims 1 to 6, **characterized in that** at least two partial regions (2, 2') of each sheet of the sheet material are checked by the measuring apparatus (10), and that a partial region (4) or partial regions of the window (3) is (are) checked for soiling, through which partial region(s), upon the check of the sheet material (1), the light (14) reaches the sensor line (11) and which with respect to its (their) width(s) and its (their) location(s) in the beam path of the light (14) correspond(s) to the checked partial regions (2, 2') of the sheet material (1), which partial region(s), however, has (have) a smaller width than that region of the window (3) through which, upon the check of the sheet material (1), light (14) reaches the sensor line (11).

8. The method according to any of claims 1 to 7, **characterized in that**, upon the check of the sheet material, from each sheet of the sheet material there is recorded an image (5), which has a greater length than the sheet material, and for the check of a soiling of the window (3) of the measuring apparatus (10), either the image (5) of each sheet of the sheet material is evaluated or at regular intervals an image (5) of a sheet of the sheet material is evaluated or the images (5) of several sheets of the sheet material are evaluated together.

9. The method according to any of claims 1 to 8, **characterized in that** by the measuring apparatus (10) there is automatically prompted, in dependence on a result of the soiling check, a cleaning of the window (3), in particular when the soiling of the window (3), ascertained upon the soiling check, exceeds or exceeds several times in succession a predefined threshold value.

10. A measuring apparatus (10) for checking sheet material (1) that for its check is transported along a transport path (6) past the measuring apparatus (10), having
- at least one light source (12) for irradiating the sheet material (1),
- at least one sensor line (11) for detecting the light (14) emanating from the sheet material, which sensor line has at least the width (1') of the sheet material,
- at least one window (3) that is arranged between the sensor line (11) and the transport path (6) of the sheet material,
- at least one evaluation device (15) for evaluating light signals that are detected by the sensor line (11) upon the detection of the light (14),
wherein
- the window (3), the light source (12) and the sensor line (11) are arranged such that upon operation of the measuring apparatus (10) the light source (12) radiates light (13) on the window (3) and, where applicable, the sheet material (1) arranged adjacent the window, and the sensor line (11) detects light (14) emanating from the window (3) and, where applicable, the sheet material (1), and
- the evaluation device (15) for checking the sheet material (1) is designed to check the sheet material not over the full area but only at least a partial region (2) of the sheet material to be checked, which partial region has a specified length and width, but altogether is narrower than the width (1') of the sheet material, through detection and evaluation of the light (14) emanating from the at least one partial region (2) of the sheet material,
**characterized in that** the evaluation device (15) is configured to evaluate, for the soiling check of the window (3), only that light that emanates from a partial region (4) of the window (3), through which, upon the check of the sheet material (1), the light (14) reaches the sensor line (11), and which with respect to its width (8) and its location in the beam path of the light (14) corresponds to the at least one checked partial region (2) of the sheet material (1).

11. The measuring apparatus (10) according to claim 10, **characterized in that** the measuring apparatus (10) is configured to record, for the check of the sheet material, an image (5) of a sheet of the sheet material, which image has a greater length than the sheet, and that the evaluation device (15) is configured to evaluate, for the soiling check of the window (3), an image region (9) arranged next to the sheet on the image (5), which image region represents that partial region (4) of the window (3), through which, upon the check of the sheet material (1), the light (14) reaches the sensor line and which furthermore with respect to its width and its location in the beam path of the light (14) corresponds to that at least one partial region (2) of the sheet material that is to be checked.

12. The measuring apparatus (10) according to either of claims 10 or 11, **characterized in that** the measuring apparatus (10) is formed for measuring the remission of the sheet material and the light remitted by the window (3), and/ or that the measuring apparatus (10) is formed for measuring the transmission of the sheet material and the light transmitted through the window (3).

13. The measuring apparatus (10) according to claim 12, **characterized in that** it is designed, for the check of a soiling of the window (3), to evaluate an image (5) of each sheet of the sheet material or to evaluate at regular intervals an image (5) of a sheet of the sheet material or to evaluate the images (5) of several sheets of the sheet material together.

14. The measuring apparatus (10) according to any of claims 10 to 13, **characterized in that** it is configured to automatically prompt, in dependence on a result of the soiling check, a cleaning of the window (3), in particular when the evaluation device (15) ascertains, upon the soiling check, a soiling of the window (3) that exceeds or exceeds several times in succession a predefined threshold value.

15. An apparatus (20) for processing sheet material (1), in particular value documents, which is designed to transport sheet material (1) along a transport path (6), **characterized in that** it has a measuring apparatus (10) according to any of claims 10 to 14, wherein the measuring apparatus (10) is arranged on one side or on both sides of the transport path (6).

## Revendications

1. Procédé de vérification de l'encrassement d'une fenêtre d'un dispositif de mesure (10) qui est conçu pour la vérification de produit en feuilles (1) transporté pour sa vérification le long d'une voie de transport (6) en passant par le dispositif de mesure et qui comporte
- au moins une source lumineuse (12) destinée à l'irradiation du produit en feuilles (1),
- au moins une ligne de capteur (11) destinée à la détection de la lumière (14) émanant du produit en feuilles, la ligne de capteur (11) ayant au moins la largeur (1') du produit en feuilles,
- au moins une installation d'évaluation (15) destinée à l'évaluation de signaux lumineux détectés par la ligne de capteur (11) lors de la détection de la lumière (14), et
- au moins une fenêtre (3) située entre la ligne de capteur (11) et la voie de transport (6) du produit en feuilles,
consistant en ce que, lors de phases durant lesquelles le produit en feuilles (1) se trouve dans la zone de détection de la ligne de capteur (11), le dispositif de mesure (10) effectue une vérification du produit en feuilles au cours de laquelle le produit en feuilles n'est pas vérifié sur sa pleine surface mais uniquement au moins une zone partielle (2) de chaque feuille du produit en feuilles ayant une longueur et une largeur (22) prédéterminées et étant au total plus étroite que la largeur (1') du produit en feuilles est vérifiée par détection et évaluation de la lumière (14) émanant de la au moins une zone partielle (2) de la feuille, et
lors de phases durant lesquelles il n'y a pas de produit en feuilles (1) dans la zone de détection de la ligne de capteur (11), de la lumière émanant de la fenêtre (3) est détectée et évaluée pour la vérification de l'encrassement de la fenêtre (3),
**caractérisé en ce que**, pour la vérification de l'encrassement de la fenêtre (3), la lumière évaluée (14) est uniquement celle qui émane d'une zone partielle (4) de la fenêtre (3), zone à travers laquelle, lors de la vérification de produit en feuilles, la lumière (14) parvient à la ligne de capteur (11) et dont la largeur (8) et la position dans le trajet des rayons de la lumière (14) correspond à la au moins une zone partielle (2) du produit en feuilles (1) vérifiée lors de la vérification de produit en feuilles.

2. Procédé selon la revendication 1, **caractérisé en ce que**, pour la vérification de produit en feuilles, respectivement une image (5) d'une feuille du produit en feuilles ayant une longueur supérieure à celle de la feuille est capturée, et que, pour la vérification de l'encrassement de la fenêtre (3), une zone d'image (9) située à côté de la feuille sur l'image est évaluée, cette zone représentant la zone partielle (4) de la fenêtre (3) à travers laquelle la lumière (14) parvient à la ligne de capteur lors de la vérification de produit en feuilles (1) et dont la largeur et la position dans le trajet des rayons de la lumière (14) correspond à la au moins une zone partielle (2) vérifiée du produit en feuilles.

3. Procédé selon la revendication 1 ou 2, **caractérisé en ce que** la lumière (14) émanant de la zone partielle (4) de la fenêtre (3) est une lumière réémise par la fenêtre (3) et/ou une lumière transmise par la fenêtre (3).

4. Procédé selon une des revendications de 1 à 3, **caractérisé en ce que** la zone partielle (4) de la fenêtre (3) de laquelle émane la lumière (14) qui est évaluée pour la vérification d'un encrassement de la fenêtre (3) présente une largeur inférieure à la largeur du produit en feuilles (1) vérifié.

5. Procédé selon une des revendications de 1 à 4, **caractérisé en ce que** la zone partielle (4) de la fenêtre (3) de laquelle émane la lumière (14) qui est évaluée pour la vérification d'un encrassement de la fenêtre (3) présente une largeur inférieure à la zone de la fenêtre (3) à travers laquelle de la lumière (14) parvient à la ligne de capteur (11) lors de la vérification de produit en feuilles (1).

6. Procédé selon une des revendications de 1 à 5, **caractérisé en ce que**, lors de la vérification de l'encrassement de la fenêtre (3), la position et la largeur de la zone partielle (4) de la fenêtre (3) à vérifier quant à l'encrassement est choisie en fonction de la sorte du produit en feuilles vérifié.

7. Procédé selon une des revendications de 1 à 6, **caractérisé en ce qu'**au moins deux zones partielles (2, 2') de chaque feuille du produit en feuilles sont vérifiées par le dispositif de mesure (10) et **en ce qu'**une zone partielle (4) ou des zones partielles de la fenêtre (3) est (sont) vérifiée(s) quant à l'encrassement et est (sont) une zone (des zones) à travers laquelle (lesquelles) la lumière (14) parvient à la ligne de capteur (11) lors de la vérification de produit en feuilles (1) et a (ont) une largeur et une position dans le trajet des rayons de la lumière (14) qui correspond aux zones partielles (2, 2') vérifiées du produit en feuilles (1) mais a (ont) une largeur qui est inférieure à la zone de la fenêtre (3) à travers laquelle de la lumière (14) parvient à la ligne de capteur (11) lors de la vérification de produit en feuilles (1).

8. Procédé selon une des revendications de 1 à 7, **caractérisé en ce que**, lors de la vérification de produit en feuilles, de chaque feuille du produit en feuilles, une image (5) ayant une longueur supérieure à celle du produit en feuilles est capturée, et **en ce que**, pour la vérification d'un encrassement de la fenêtre (3) du dispositif de mesure (10), soit l'image (5) de chaque feuille du produit en feuilles est évaluée ou bien, à intervalles réguliers, une image (5) d'une feuille du produit en feuilles est évaluée ou bien les images (5) de plusieurs feuilles du produit en feuilles sont évaluées ensemble.

9. Procédé selon une des revendications de 1 à 8, **caractérisé en ce que**, par le dispositif de mesure (10), en fonction d'un résultat de la vérification de l'encrassement, un nettoiement de la fenêtre (3) est automatiquement déclenché, en particulier quand l'encrassement de la fenêtre (3) constaté lors de la vérification de l'encrassement dépasse une valeur seuil fixée ou la dépasse plusieurs fois de suite.

10. Dispositif de mesure (10) destiné à la vérification de produit en feuilles (1) transporté pour sa vérification le long d'une voie de transport (6) en passant par le dispositif de mesure (10), comportant
- au moins une source lumineuse (12) destinée à l'irradiation du produit en feuilles (1),
- au moins une ligne de capteur (11) qui est destinée à la détection de la lumière (14) émanant du produit en feuilles et qui a au moins la largeur (1') du produit en feuilles,
- au moins une fenêtre (3) située entre la ligne de capteur (11) et la voie de transport (6) du produit en feuilles,
- au moins une installation d'évaluation (15) destinée à l'évaluation de signaux lumineux détectés par la ligne de capteur (11) lors de la détection de la lumière (14),
cependant que
- la fenêtre (3), la source lumineuse (12) et la ligne de capteur (11) sont disposées de telle manière que, lors du fonctionnement du dispositif de mesure (10), la source lumineuse (12) émet de la lumière (13) sur la fenêtre (3) et le cas échéant sur le produit en feuilles (1) voisin de la fenêtre, et la ligne de capteur (11) détecte de la lumière (14) émanant de la fenêtre (3) et le cas échéant du produit en feuilles (1), et
- l'installation d'évaluation (15) étant, pour vérification de produit en feuilles (1), conçue de manière à ne pas vérifier sur sa pleine surface le produit en feuilles, mais uniquement au moins une zone partielle (2) du produit en feuilles à vérifier ayant une longueur et une largeur prédéterminées mais étant au total plus étroite que la largeur (1') du produit en feuilles, par détection et évaluation de la lumière (14) émanant de la au moins une zone partielle (2) du produit en feuilles,
**caractérisé en ce que** l'installation d'évaluation (15) est configurée de manière à, pour la vérification de l'encrassement de la fenêtre (3), n'évaluer que la lumière émanant d'une zone partielle (4) de la fenêtre (3) à travers laquelle la lumière (14) parvient à la ligne de capteur (11) lors de la vérification de produit en feuilles (1) et dont la largeur (8) et la position dans le trajet des rayons de la lumière (14) correspond à la au moins une zone partielle (2) vérifiée du produit en feuilles (1).

11. Dispositif de mesure (10) selon la revendication 10, **caractérisé en ce que** le dispositif de mesure (10) est configuré de manière à, pour la vérification du produit en feuilles, capturer une image (5) d'une feuille du produit en feuilles ayant une longueur supérieure à celle de la feuille, et **en ce que** l'installation d'évaluation (15) est configurée de manière à, pour la vérification de l'encrassement de la fenêtre (3), évaluer une zone d'image (9) située à côté de la feuille sur l'image (5) qui représente la zone partielle (4) de la fenêtre (3) à travers laquelle la lumière (14) parvient à la ligne de capteur lors de la vérification de produit en feuilles (1) et dont la largeur et la position dans le trajet des rayons de la lumière (14) correspond en outre à la au moins une zone partielle (2) à vérifier du produit en feuilles.

12. Dispositif de mesure (10) selon la revendication 10 ou 11, **caractérisé en ce que** le dispositif de mesure (10) est appareillé pour la mesure de la rémission du produit en feuilles et de la lumière réémise par la fenêtre (3) et/ou **en ce que** le dispositif de mesure (10) est appareillé pour la mesure de la transmission du produit en feuilles et de la lumière transmise par la fenêtre (3).

13. Dispositif de mesure (10) selon la revendication 12, **caractérisé en ce qu'**il est conçu de manière à, pour la vérification d'un encrassement de la fenêtre (3), évaluer une image (5) de chaque feuille du produit en feuilles, ou bien, à intervalles réguliers, évaluer une image (5) d'une feuille du produit en feuilles ou bien évaluer ensemble les images (5) de plusieurs feuilles du produit en feuilles.

14. Dispositif de mesure (10) selon une des revendications de 10 à 13, **caractérisé en ce qu'**il est configuré de manière à, en fonction d'un résultat de la vérification de l'encrassement, déclencher automatiquement un nettoiement de la fenêtre (3), en particulier quand l'installation d'évaluation (15) constate lors de la vérification de l'encrassement un encrassement de la fenêtre (3) qui dépasse une valeur seuil fixée ou qui la dépasse plusieurs fois de suite.

15. Dispositif (20) de traitement de produit en feuilles (1), en particulier de documents de valeur, qui est conçu pour transporter du produit en feuilles (1) le long d'une voie de transport (6), **caractérisé en ce qu'**il comporte un dispositif de mesure (10) selon une des revendications de 10 à 14, le dispositif de mesure (10) étant disposée d'un côté ou des deux côtés de la voie de transport (6).
